Europäisches Patentamt

(19) European Patent Office

Office européen des brevets

(11) Veröffentlichungsnummer: **0 213 624**
**B1**

(12) **EUROPÄISCHE PATENTSCHRIFT**

(45) Veröffentlichungstag der Patentschrift:
07.02.90

(51) Int. Cl.⁵: **B 62 D 31/02**

(21) Anmeldenummer: **86112017.8**

(22) Anmeldetag: **30.08.86**

(54) **Vorbauanordnung für Nutzfahrzeuge, insbesondere für Omnibusse.**

(30) Priorität: **04.09.85 DE 3531525**

(43) Veröffentlichungstag der Anmeldung:
**11.03.87 Patentblatt 87/11**

(45) Bekanntmachung des Hinweises auf die Patenterteilung:
**07.02.90 Patentblatt 90/06**

(84) Benannte Vertragsstaaten:
**BE FR GB IT NL**

(56) Entgegenhaltungen:
**DE-A-2 712 752**

(73) Patentinhaber: **Daimler-Benz Aktiengesellschaft
Postfach 600202 Mercedesstrasse 136
D-7000 Stuttgart 60 (DE)**

(72) Erfinder: **Honer, Gerhard, Dipl.-Ing.
Neuffenstrasse 19
D-7252 Weil der Stadt (DE)**
Erfinder: **Seifert, Peter, R., Dipl.-Ing.
Hohenzollernstrasse 47
D-7252 Weil der Stadt 5 (DE)**

EP 0 213 624 B1

2

**Beschreibung**

Die Erfindung betrifft eine Vorbauanordnung für Nutzfahrzeuge, insbesondere für Omnibusse, mit Tragsäulen, die von einem Vordach ausgehend eine Windschutzscheibe seitlich einrahmen und in einen unterhalb von dieser verlaufenden Brüstungsteil übergehen sowie mit Seitentüren o.dgl., die an einen Nutzaufbau, insbesondere eine Fahrgastzelle und einen darunter liegenden, wahlweise einsetzbaren Stauraum verschiedener Höhe angrenzen.

Vorbauanordnungen dieser Art sind bekannt. Moderne Omnibusse werden heute innerhalb eines vorgegebenen Baumusters mit unterschiedlichen Kofferraumgrößen angeboten. Die Fahrgastzelle bleibt daher immer gleich ausgebildet; der darunter liegende Kofferraum dagegen wird mit unterschiedlicher Höhe geliefert. In gleicher Höhe zur Fahrbahn angeordnet, muß dagegen der Fahrerplatz sein.

Das bringt bei bekannten Vorbauanordnungen den Nachteil mit sich, daß der Vorbau jeweils an die variable Fahrgastzelle angepaßt werden muß. Es ist zwar bekannt, im Fahrzeugbau bei vorwiegend kastenförmigen Aufbauten weitgehend nach einem Baukastenprinzip zu arbeiten (Veröffentlichung Automobilindustrie.., Seite 29 bzw. DE-OS-2 712 752); doch treten immer Schwierigkeiten auf, wenn aerodynamisch geformte Aufbauten gewünscht sind, weil die dann gewölbte Seitenfallung dazu führt, daß die Tragsäulen und auch die Türbereiche schräg verlaufen und bei einer Verkürzung oder Verlängerung Änderungen in der Breite z. B. des Vordaches auftreten. Es ist auch sehr schwierig, einen formalen Übergang von der Fensterebene der Fahrgäste zu dem Seitenfenster des Vorbaus bzw. zur Windschutzscheibe zu erreichen, da der Vorbau sich bei den einzelnen Busvarianten immer relativ zur Fahrgastebene unterschiedlich ausrichten muß. Es ist daher in der Regel notwendig, entweder die seitlich von der Windschutzscheibe angeordneten Stützsäulen (A-Säule) zu verlängern und aufzurichten, das Vordach anzupassen, die Tür zu verlängern oder ein Zusatzfenster über der Tür anzuordnen und auch die Türen mit einem Zusatzwerkzeug nachzuschlagen. Solche Anpassungsarbeiten sind aufwendig.

Der Erfindung liegt daher die Aufgabe zugrunde, eine Vorbauanordnung der eingangs genannten Art so auszubilden, daß der Anpassungsaufwand für die aufeinander abzustimmenden Karosserieteile so gering wie möglich wird.

Zur Lösung dieser Aufgabe wird bei einer Vorbauanordnung der eingangs genannten Art vorgesehen, daß die Wurzel der Tragsäule jeweils um den Betrag unter der Unterkante der Windschutzscheibe liegt, der der Differenz zwischen maximaler Stauraumhöhe und vorgesehener Stauraumhöhe entspricht. Durch diese Ausgestaltung kann die Fahrerplatzposition immer gleich gehalten werden und es kann auch die Unterkante der Windschutzscheibe, d.h. der Blickwinkel für den Fahrer, immer gleich bleiben. Dadurch, daß der gesamte Vorbau mit seinem oberen Teil gerade so weit nach unten bewegt wird, wie das notwendig ist, braucht keine Änderung des Vordaches und der oberen seitlichen und vorderen Bereiche vorgenommen zu werden. Zu ändern sind lediglich Bereiche, die in besonders einfacher Weise gerade und parallel zueinander verlaufende Wand- und/oder Tragteile mit der Fallung 0 aufweisen, die je nach Bedarf vorgesehen oder weggelassen werden. Der Brüstungsteil behält immer die gleiche Höhe gegenüber dem Fahrersitz. Hier sind jedoch ebenfalls keine aufwendigen Anpassungsarbeiten nötig, wenn hier ein Umbau erforderlich ist. Auch das Türunterteil und der untere Bereich des Brüstungsteiles bleibt bei allen Busmodellen gleich. Dies gilt auch für das Vordach.

Es hat sich als besonders einfach erwiesen, wenn die Tragteile des neuen Vorbaus als etwa vertikal verlaufende Tragsäulen ausgebildet sind, die in den Trennbereichen gleichen Querschnitt aufweisen und wenn sie aus zwei Halbschalen bestehen, wobei dann der Brüstungsteil nur mit der inneren Halbschale verbunden ist. Es wird auf diese Weise verhältnismäßig einfach möglich, an den Trennbereichen die gerade verlaufenden Stücke aus der äußeren Halbschale der Tragsäule herauszunehmen, so daß dadurch die Tür nach unten abgesenkt und der Brüstungsteil nach oben angehoben werden kann. Wird die entsprechende Höhe auch aus der Tür herausgenommen, so kann in einfacher Weise die vorher erwähnte Anpassung durchgeführt werden.

Vorteilhaft ist es auch, wenn die Unterkante des Seitenfensters mit der Wurzel der Tragsäule fluchtet, weil dann alle Aufbauvarianten gleiches optisches Aussehen behalten.

Ein Ausführungsbeispiel der Erfindung ist in der Zeichnung dargestellt und wird im folgenden erläutert. Es zeigen:

Fig. 1   eine schematische Seitenansicht des Vorbaus für einen Omnibus mit einer daran angrenzenden Fahrgastzelle und einem in seiner Höhe maximal ausgelegten Stauraum,

Fig. 2   den Vorbau der Fig. 1, jedoch bei einem niedrigeren Stauraum, aber gleicher Fahrgastzelle,

Fig. 3   den Vorbau der Fig. 1, jedoch bei zwar gleicher Fahrgastzelle, aber bei einem Stauraum mit minimaler Höhe,

Fig. 4   die Frontansicht des Vorbaues der Fig. 1,

Fig. 5   die Frontansicht des Vorbaues der Fig. 3,

Fig. 6   eine schematische perspektivische Darstellung des Vorbaues der Fig. 1 bis 5 mit einer praktisch verwirklichbaren Tragkonstruktion und

Fig. 7   den Schnitt durch die Tragkonstruktion der Fig. 6 in Richtung der Linie VII.

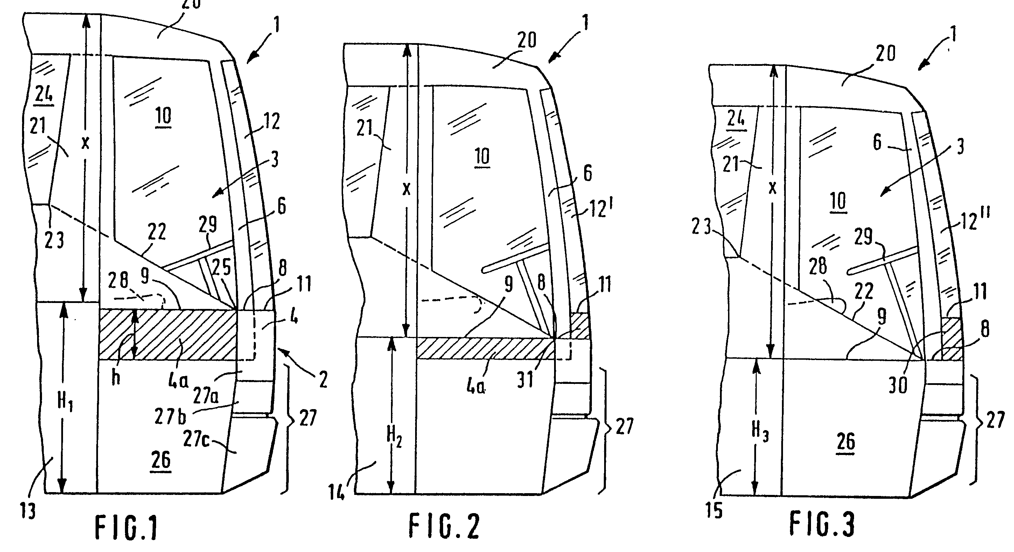

In den Fig. 1 bis 5 ist eine Vorbauanordnung 1 für einen Omnibus gezeigt, die einen an der Frontseite unterhalb der Windschutzscheibe 12, 12' bzw. 12" verlaufenden Brüstungsteil 2 aufweist, der sich seitlich bis in den Bereich der Seitentür 3 erstreckt. Nach oben schließt sich an die Seitentür 3 eine die Windschutzscheibe jeweils einfassende Tragsäule 6 an, die üblicherweise als A-Säule bezeichnet wird. Zur Vorbauanordnung gehört auch noch ein fest mit den beidseitig der jeweiligen Windschutzscheibe 12, 12' bzw. 12" angeordneten A-Säulen 6 verbundenes Vordach 20. Nach hinten an die Vorbauanordnung 1 schließt sich jeweils eine Fahrgastzelle 21 an, unter den ein Stauraum mit bestimmter Höhe liegt.

Wie aus den Fig. 1 bis 3 erkennbar ist, weist der Stauraum 13 der Fig. 1 eine Höhe $H_1$ auf, der Stauraum 14 der Ausführung der Fig. 2 eine Höhe $H_2$ und der Stauraum 15 eine Höhe $H_3$. Dies ist beispielsweise dadurch bedingt, daß die Ausführung nach Fig. 1 mit dem höchsten Stauraum für einen Überlandreisebus ausgelegt ist, der einen größeren Stauraum benötigt, während die Busausführung nach Fig. 3 beispielsweise nur ein Stadtbus o.dgl. ist.

Die Vorbauanordnung 1 ist nun so ausgelegt, daß sie in einfacher Weise jeweils an die Fahrgastzelle 21 und den darunter liegenden, in seiner Höhe verschieden ausgelegten Stauraum anpaßbar ist.

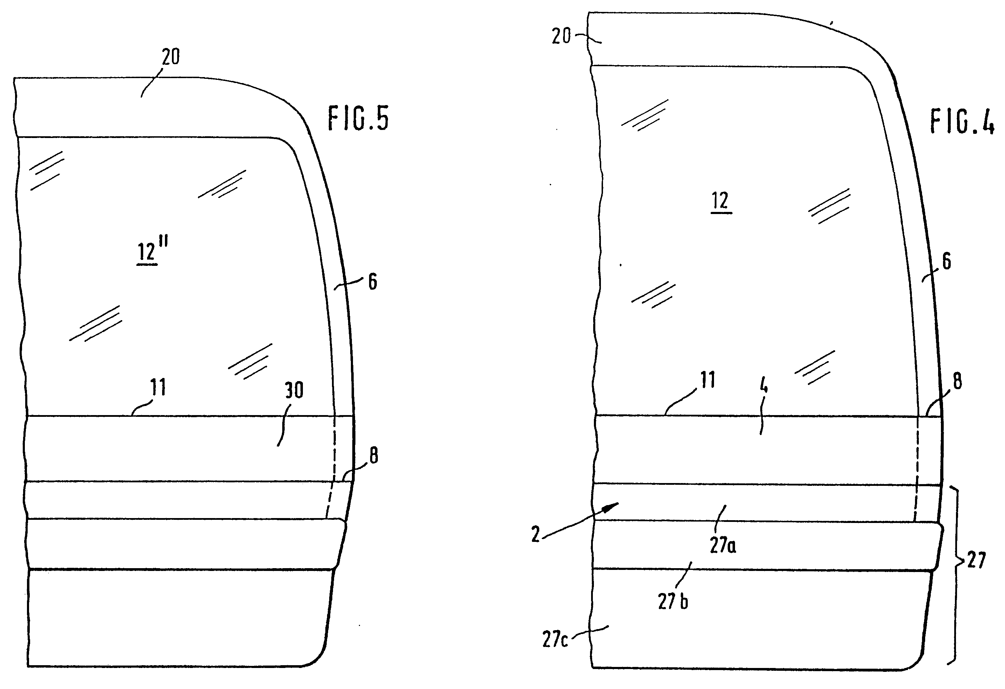

Aus der Fig. 1 und der Fig. 4, die beide den gleichen Vorbau für die Busausführung mit dem höchsten Stauraum mit der Höhe $H_1$ zeigen, ist zu ersehen, daß über dem Stauraum 13 die Fahrgastzelle 21 sitzt, die ihrerseits eine bestimmte Höhenabmessung X aufweist. Auf die entsprechende Höhe $H_1 + x$ ausgelegt ist daher die Vorbauanordnung 1. Die Seitentür 3, die dort aus dem Fenster 10 mit der schräg nach hinten ansteigenden Unterkante 22 versehen ist, die in der Verlängerung nach hinten auf die vordere untere Ecke 23 des ersten Fensters 24 der Fahrgastzelle 21 ausläuft. Seitenfenster 24 und Seitenfenster 10 der Tür sind auf diese Weise optisch aneinander angepaßt. Die vordere Ecke 25 des Seitenfensters 10 der Tür liegt in etwa auf einer horizontal verlaufenden Linie 9, die bei der Vorbauanordnung der Fig. 1 an einen Trennbereich 4a angrenzt, der die Höhe h aufweist und auf dessen Bedeutung noch eingegangen wird. Unterhalb des Trennbereiches 4a der Seitentür 3 sitzt das Türunterteil 26, das die Tür nach unten begrenzt.

Auf der Frontseite ist bei der Ausführung der Fig. 1 analog die A-Säule bzw. die Tragsäule 6 seitlich von der Windschutzscheibe 12 und der Trennbereich 4 angeordnet, dessen Höhe der Höhe h des Trennbereiches 4a der Seitentür 3 entspricht. Die Oberkante des Trennbereiches 4 entspricht der Unterkante 11 der Windschutzscheibe 12. An der Oberkante des Trennbereiches 4 grenzt auch die Wurzel 8 der A-Säule 6 an. Unterhalb des Trennbereichs 4 liegt ein Bereich 27 des Brüstungsteiles 2, der aus den drei, aus stilistischen Gründen, untereinander liegenden Teilabschnitten 27a bis 27c besteht.

Die Abwandlung dieses in der Fig. 1 und 4 gezeigten Vorbaues zu der Vorbauanordnung der Figuren 3 und 5 geschieht nun dadurch, daß die Trennbereiche 4 und 4a mit der Höhe h zum einen aus der Seitentür 3, zum anderen aus dem Brüstungsteil 2 herausgenommen werden, so daß die Gesamthöhe des Fahrzeuges auf die Höhe $H_3 + x$ abgesenkt werden kann, wobei die Differenz zwischen $H_1$ und $H_3$ gerade der Höhe h entspricht.

Wie sich aus Fig. 3 ergibt, bleibt auch in diesem Fall die Zuordnung der Fahrgastzelle 21 zu dem oberen Teil der Tür gleich, so daß die Unterkante 22 des Fensters 10 der Seitentür 3 nach wie vor auf die vordere untere Ecke 23 des ersten Fensters 24 der Fahrgastzelle 21 ausläuft. Trotz der Verkleinerung der Höhe des Fahrzeuges bleibt daher der optische Eindruck und die optische Anpassung von Fahrgastzelle 21 und Vorbau 1 gleich. Der Stauraum 15 weist hier jedoch nur noch die Höhe $H_3$ auf, der hier vor dem Türunterteil 26 und dem unteren Frontbereich 27 des Brüstungsteiles 2 liegt, die gegenüber der Ausführungs der Fig. 1 und 4 gleichgeblieben sind.

Um bei dieser abgewandelten Ausführung die Höhe der Unterkante 11 der Windschutzscheibe 12" beibehalten zu können, die in bezug zur Höhe des Fahrsitzes 28 und des Lenkrades 29 gleich angeordnet bleiben soll, wird vor der Windschutzscheibe 12' ein zusätzlicher Brüstungsteil 30 angeordnet, dessen Oberkante mit der Unterkante 11 der Windschutzscheibe 12" fluchtet, die in der gleichen Höhe bezüglich der Fahrbahn verläuft, wie das auch bei der Ausführung der Fig. 1 und 4 der Fall ist. Dieses Brüstungsteil 30 kann zusätzlich aufgesetzt werden, es ist natürlich auch möglich, wie später noch erläutert werden wird, im Trennbereich 4 Vorkehrungen zu treffen, daß der in Fig. 3 schraffierte Brüstungsteil 30 bei allen Ausführungen vorhanden ist und sich ihm gegenüber nur die A-Säule 6 entsprechend verschiebt und die Windschutzscheibe 12, 12' bzw. 12" entsprechend kürzer ausgebildet wird.

Die in den Fig. 1 bis 5 nur schematisch angedeuteten Trennbereiche 4 am Brüstungsteil bzw. 4a in der Seitentür, sind jeweils in solchen Bereichen angeordnet, in denen die entsprechenden Trag- oder Karosserieteile die Fallung 0 aufweisen. In diesen Bereichen 4, 4a ist es daher möglich, Kürzungen der Bauteile vorzunehmen, ohne daß schwierige Anpassungsarbeiten wegen gebogener Säulen o.dgl. notwendig werden.

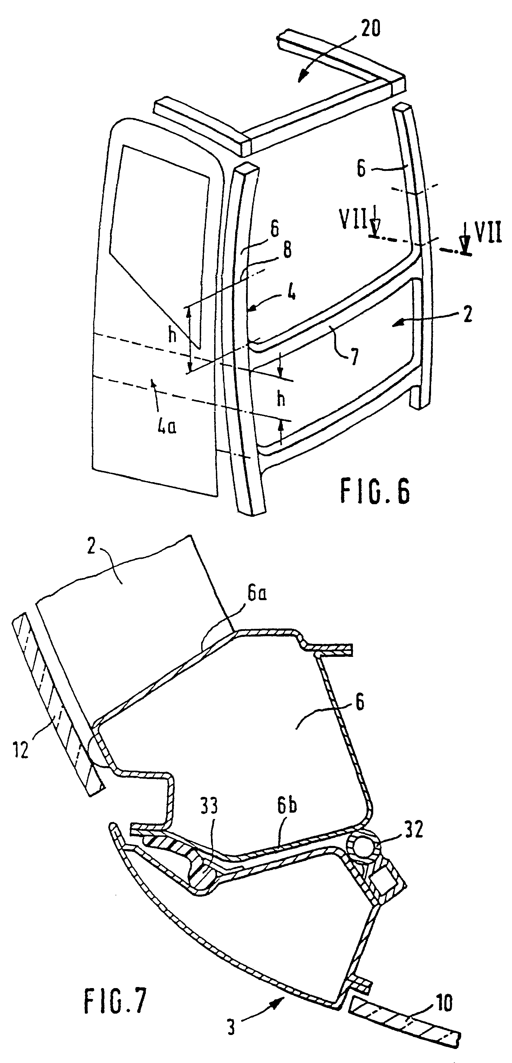

In den Fig. 6 und 7 ist anhand eines Ausführungsbeispieles gezeigt, wie sich die Trennbereiche 4 bzw. 4a verwirklichen lassen, um die erwünschte Anpassung des Vorbaues an verschiedene Stauraumhöhen zu ermöglichen. Aus den Fig. 6 und 7 geht hervor, daß die sogenannte A-Säule 6, welche jeweils die Windschutzscheibe 12 seitlich begrenzt, aus zwei Halbschalen 6a, 6b besteht, von denen die Halbschale 6a die innere Halbschale, 6b die äußere Halbschale ist, an der auch die Scharniere 32 für die Seitentür 3 angebracht sind. Aus Fig. 7 ist auch erkennbar, daß zwischen dem vorderen Bereich der Seitentür 3 und der A-Säule 6 eine Dichtung 33 zum dichten Abschluß zwischen A-Säule 6 und Seitentür 3 vorgesehen ist.

Aus Fig. 6 wird deutlich, daß es zur Anpassung des Vorbaues 2 an verschiedene Bauhöhen der zugeordneten, in der Fig. 6 allerdings nicht mehr gezeigten Stauräume, genügt, den Trennbereich 4 mit einer Höhe h zu verwirklichen, der kurz oberhalb von einem Brüstungsquerträger 7 verläuft, und zwar in einem Bereich, in dem die Fallung der aus den Halbschalen 6a und 6b bestehenden Tragsäule 6 bzw. A-Säule gleich 0 ist. Der Bereich 4 ist daher nur an der inneren Halbschale 6a verwirklicht. Der Bereich 4a an der Seitentür in einem Bereich ebenfalls mit der Fallung 0 und an der äußeren Halbschale 6b der A-Säule 6, und zwar ebenfalls mit der Fallung 0 über einen Bereich mit der Höhe h.

Wird daher ausgehend von der Vorbauanordnung, wie sie in Fig. 6 gezeigt ist, die der größten Stauraumhöhe $H_1$ des Stauraumes 13 der Fig. 1 und 4 entspricht, eine Verkürzung auf die Ausführung der Fig. 3 und 5 vorgenommen, so genügt es, aus dem Trennbereich 4 mit der Fallung 0 der inneren Halbschale 6a der A-Säule 6 ein Stück mit der Höhe h herauszuschneiden und aus der äußeren Halbschale 6b ein ebensolches Stück, jedoch im Trennbereich 4a der versetzt zu dem Trennbereich 4 liegt. Dadurch rutscht die A-Säule 6 mit ihrer Wurzel 8, die hier nur an der inneren Halbschale 6a vorgesehen ist, um die Höhe h nach unten, die der Differenz $H_1 - H_3$ entspricht. Damit bewegt sich aber der Brüstungsquerträger 7 relativ dazu um dieselbe Höhe nach oben und liegt, wie dies in Fig. 3 erkennbar ist, mit dem Teil 30 vor der A-Säule 6. Auf dem Brüstungsquerträger 7 kann sich dann die Windschutzscheibe abstützen.

Analog läßt sich auch eine Zwischengröße verwirklichen, wenn der Stauraum 14, wie in Fig. 2 gezeigt, beispielsweise die Höhe $H_2$ aufweist. Der vor die A-Säule 6 ragende Teil 31 des Brüstungsteiles 2 wird dann entsprechend kleiner. Entscheidend ist, daß jeweils in den Trennbereichen 4 bzw. 4a die Halbschalen 6a, 6b der A-Säule 6 und analog die Seitenteile der Tür die Fallung 0 aufweisen, so daß ein Heraustrennen entsprechender Bauteile keine Fallungsanpassung oder sonstige Anpassung von Tür oder Vorbauteilen notwendig macht. In allen Fällen liegt auch die Höhe des Fahrersitzes 28 und das Lenkrad 29 in der gleichen Höhe bezüglich der Unterkante 11 der Windschutzscheibe 12, 12', 12" und in gleicher Höhe zur Fahrbahn. Die Vorbauanordnung ermöglicht daher die Verwendung gleicher Bauteile trotz verschiedener Bauhöhe. Sie eignet sich besonders für die Serienfertigung von Fahrzeugen unterschiedlicher Bauraumgrößen. In allen Fällen bleibt die Fahrgastzelle 21 unverändert. Unverändert bleibt auch das Türoberteil mit der Seitenscheibe 10 sowie das Türunterteil 26 und die zugeordnete A-Säule 6 und der Teil 27 des Brüstungsteiles 2.

## Patentansprüche

1. Vorbauanordnung für Nutzfahrzeuge, insbesondere für Omnibusse, mit Tragsäulen (6), die von einem Vordach (20) ausgehend eine Windschutzscheibe seitlich einrahmen und in einen unterhalb von dieser verlaufenden Brüstungsteil (2) übergehen, sowie mit Seitentüren (3) o.dgl., die an einem Nutzaufbau, insbesondere eine Fahrgastzelle (21) und einen darunter liegenden, wahlweise einsetzbaren Stauraum (13) verschiedener Höhe ($H_1$, $H_2$, $H_3$) angrenzen, dadurch gekennzeichnet, daß die Wurzel (8) der Tragsäule (6) jeweils um den Betrag der Differenz zwischen maximaler Stauraumhöhe ($H_1$) und vorgesehener Stauraumhöhe ($H_2$ oder $H_3$) unter der Unterkante (11) der Windschutzscheibe (12) liegt.

2. Vorbauanordnung nach Anspruch 1, dadurch gekennzeichnet, daß Brüstungsteil (2) und Seitentüren (3) Trennbereiche (4, 4a) mit gerade und parallel zueinander verlaufenden Wand- und/oder Tragteilen mit der Fallung = 0 aufweisen, deren Höhe (h) mindestens dem Höhenunterschied ($H_1 - H_3$) verschiedener Stauräume (5) entspricht.

3. Vorbauanordnung nach Anspruch 2, dadurch gekennzeichnet, daß die Tragteile als etwa vertikal verlaufende Tragsäulen (6) ausgebildet sind, die an den Trennbereichen (4, 4a) gleichen Querschnitt aufweisen.

4. Vorbauanordnung nach Anspruch 3, dadurch gekennzeichnet, daß die Tragsäulen (6) aus zwei Halbschalen (6a, 6b) aufgebaut sind, wobei der Brüstungsteil (2) nur mit der inneren Halbschale (6a) verbunden ist.

5. Vorbauanordnung nach Anspruch 4, dadurch gekennzeichnet, daß der Trennbereich (4, 4') von äußerer und innerer Halbschale (6a, 6b) in der Höhe versetzt zueinander angeordnet ist.

6. Vorbauanordnung nach Anspruch 1, dadurch gekennzeichnet, daß die Wurzel (8) der Tragsäule (6) mit einer horizontalen Linie (9) fluchtet, auf der die vorderste Ecke des Seitenfensters (10) liegt.

7. Vorbauanordnung nach Anspruch 6, dadurch gekennzeichnet, daß die Unterkante (22) des Seitenfensters (10) schräg nach vorne verläuft und auf der horizontalen Linie (9) mit der Wurzel (8) der Tragsäule zusammentrifft.

## Claims

1. A front part arrangement for commercial vehicles, particularly for omnibuses, with bearing columns (6) which, starting from a canopy (20), laterally frame a windscreen and merge into a parapet (2), as well as side doors (3) or the like, which adjoin a service structure, particularly a passenger enclosure (21) and a storage area (13)

of varying height ($H_1$, $H_2$, $H_3$) for use as desired, characterized in that the root (8) of the bearing column (6) is situated respectively below the underside (11) of the windscreen (12) at a distance being the amount of the difference between maximum storage area height ($H_1$) and intended storage area height ($H_2$ or $H_3$).

2. A front part arrangement according to claim 1, characterized in that the parapet (2) and the side doors (3) have separating regions (4, 4a) with straight wall and or supporting parts extending parallel with one another with fall = 0, the height (h) of which corresponds at least to the difference in height ($H_1$ - $H_3$) of different storage spaces (5).

3. A front part arrangement according to claim 2, characterized in that the supporting parts are constructed as bearing columns extending substantially vertically (6) which have the same cross-section at the separation regions (4, 4a).

4. A front part arrangement according to claim 3, characterized in that the bearing columns (6) are constructed of two half-shells (6a, 6b), the parapet (2) being joined only with the inner half shell (6a).

5. A front part arrangement according to claim 4, characterized in that the separation regions (4, 4') of the outer and inner shell (6a, 6b) are arranged mutually staggered in height.

6. A front part arrangement according to claim 1, characterized in that the root (8) of the bearing column (6) is aligned on a horizontal line (9) on which the foremost corner of the side window (10) lies.

7. A front part arrangement according to claim 6, characterized in that the underside (22) of the side window (10) extends slantingly forward and meets the root (8) of the bearing column on the horizontal line (9).

**Revendications**

1. Structure d'un avant-corps pour véhicules utilitaires, en particulier pour autocars, comportant des colonnes portantes (6), qui encadrent latéralement, à partir d'un toit avant (20), un pare-brise et qui rejoignent une partie d'appui (2) située en dessous du pare-brise, ainsi que des portes latérales (3) ou analogues, qui sont adjacentes à une carrosserie utilitaire, notamment un habitacle pour passagers (21) et à un volume de rangement (13) de différentes hauteurs ($H_1$, $H_2$, $H_3$), situé en dessous et pouvant être disposé sélectivement, caractérisée en ce que la base (8) de la colonne portante (6) est située respectivement en dessous du bord inférieur (11) du pare-brise (12) à une distance correspondant à la valeur de la différence entre la hauteur maximale ($H_1$) du volume de rangement et la hauteur prévue ($H_2$, $H_3$) pour ce volume de rangement.

2. Structure d'un avant-corps selon la revendication 1, caractérisée en ce que la partie d'appui (2) et les portes latérales (3) comportent des zones séparatrices (4, 4a) pourvues de parties de paroi et/ou de parties de support qui sont droites et orientées parallèlement entre elles, en ayant une pente nulle, et dont la hauteur (h) correspond au moins à la différence entre les hauteurs ($H_1$ - $H_3$) de différents volumes de rangement (13).

3. Structure d'avant-corps selon la revendication 2, caractérisée en ce que les parties de support sont agencées comme des colonnes portantes (6) orientées à peu près verticalement et qui ont la même section dans les zones de séparation (4, 4a).

4. Structure d'avant-corps selon la revendication 3, caractérisée en ce que les colonnes portantes (6) sont constituées de deux demi-coquilles (6a, 6b), la partie d'appui (2) étant reliée seulement à la demi-coquille intérieure (6a).

5. Structure d'avant-corps selon la revendication 4, caractérisée en ce que la zone séparatrice (4, 4') des demi-coquilles extérieure et intérieure (6a, 6b) est disposée avec un décalage relatif en hauteur.

6. Structure d'avant-corps selon la revendication 1, caractérisée en ce que la base (8) de la colonne portante (6) coïncide avec une ligne horizontale (9) sur laquelle est situé le coin le plus avancé de la fenêtre latérale (10).

7. Structure d'avant-corps selon la revendication 6, caractérisée en ce que le bord inférieur (22) de la fenêtre latérale (10) est incliné en oblique vers l'avant, et rejoint la base (8) de la colonne portante au niveau de la ligne horizontale (9).

FIG.1    FIG.2    FIG.3

EP 0 213 624 B1

FIG.4

FIG.5

**FIG.6**

**FIG.7**